Europäisches Patentamt

European Patent Office

Office européen des brevets

(11) Publication number: **0 097 054**

**B1**

# EUROPEAN PATENT SPECIFICATION

(45) Date of publication of patent specification: **21.09.88**

(21) Application number: **83303431.7**

(22) Date of filing: **14.06.83**

(51) Int. Cl.⁴: **A 61 J 1/00**

(54) Injection port for plastic bags.

(30) Priority: **15.06.82 FI 822141**
**11.05.83 FI 831635**

(43) Date of publication of application:
**28.12.83 Bulletin 83/52**

(45) Publication of the grant of the patent:
**21.09.88 Bulletin 88/38**

(84) Designated Contracting States:
**AT BE CH DE FR GB IT LI LU NL SE**

(56) References cited:
**EP-A-0 011 144**
**FR-A-2 186 402**
**FR-A-2 253 496**
**US-A-3 306 563**
**US-A-3 343 541**
**US-A-3 994 412**

(73) Proprietor: **Hantaaki Oy**
**Tammelanpuistokatu 58b**
**SF-33100 Tampere 10 (FI)**

(72) Inventor: **Tiitola, Juha Kustaa**
**Ahvenisto**
**SF-33960 Pirkkala 6 (FI)**
Inventor: **Ikonen, Juhani Antero**
**Hameenpuisto 23A 15**
**SF-33210 Tampere 21 (FI)**
Inventor: **Henttonen, Juha Antero**
**Sotkankatu 21 B**
**SF-33230 Tampere 23 (FI)**
Inventor: **Suominen, Heikki Samuli**
**Sipinkuja 3**
**SF-33730 Tampere 73 (FI)**

(74) Representative: **Rushton, Ronald et al**
**SOMMERVILLE & RUSHTON 11 Holywell Hill**
**St. Albans Hertfordshire AL1 1EZ (GB)**

Courier Press, Leamington Spa, England.

## Description

The invention relates to injection ports suitable for containers of flexible, thin-film plastic which hold sterilized material for medicinal use, such as blood plasma or pharmaceutical solutions. More particularly, the invention is concerned with injection ports for infusion bags for injecting drugs and the like into the bag contents with a hypodermic needle without rupturing the bag or causing leakage of its contents and without introducing a contaminate.

Background of the Invention

Attempts have been made in the past to prepare infusion bags with a thickened portion or pad through which a hypodermic needle may be inserted for the purpose of injecting a drug or other medication into the contents of the bag. Such entry pads have been made from relatively thick, resilient material, such as rubber. Resilient pads of this type are suggested in U.S. Patent No. 2,704,075 to Cherkin and in British Patent No. 1,579,065 to A/S Haustrup Plastic.

The pad should be capable of providing sufficient support to hold a needle in place so as not to puncture adjacent or opposing portions of the bag. The pad material also should seal against leakage both along the exterior of the needle during injection and after removal of the needle. Difficulties have been experienced in the past in securing such resilient pads to the thin-film plastic materials from which the bags are made.

Another problem is that of keeping the outer surface of the injection pad sterile when the pad is pierced by a hypodermic needle. Although various types of coverings have been suggested in the past to keep the surface of the pad sterile, these coverings have certain disadvantages. For example, a pressure sensitive adhesive strip may come loose as the adhesive ages and loses its effectiveness. Plastic coverings welded to the wall of the bag may be difficult to tear or otherwise remove without violating the sterility of the pad.

Although U.S. Patent No. 3,343,541 to Bellamy suggests a tearable covering for the port of a perenteral container, the covering is made from a relatively thin tearable film. This thin tearable film must be attached both to a thicker pull strip and to the bag wall around the port area. Because the tearable film is relatively fragile, it is difficult to handle and to secure to both the pull strip and the bag wall. Furthermore, the resulting covering may be easily ruptured unintentionally during manufacture or subsequent handling of the bag, thereby contaminating the port area.

In FR-A-2 253 496 a contaner port is disclosed which comprises the features specified in the prior art portion of claim 1 and which has a sealed enclosure for maintaining the sterility of a tube projecting from the container and which is pierceable by a needle to inject a fluid into the container. In order to gain access to the tube the sealed enclosure is provided with a tab which when it is pulled tears away the top of the sealed enclosure to reveal a portion of the tube. The port employs molded parts having complex shapes so that production costs are high as compared with making and assembling a port from thin film components.

Due to difficulties in reopening a sealed plastic tube, infusion bags previously have been provided with multiple tubes in communication with the bag interior. For example, a bag may have separate tubes for filling, for emptying and for adding medications immediately prior to use. Such multiple tube arrangements are expensive to manufacture and increase the likelihood of an inadvertently broken connection.

Disclosure of the Invention

In one aspect the present invention provides a port suitable for penetration by a hollow needle to inject a fluid into the contents of a flexible container, said port including a sterile pad of resealable material for sealing a puncture caused by penetration of the pad and of a base member for the pad with the needle, and a sealed enclosure for maintaining the sterility of the pad until removal of a tab for exposing a sterile portion of the pad to permit penetration of the pad and the base member by the needle so as to provide said fluid injection, said port being characterised by:

a cover of thin flexible plastic film sealingly secured to the base member having a pierceable portion and defining therewith the sealed enclosure for the pad, said cover film being sufficiently thin and flexible to conform substantially to the shape of the pad; and a tear strip of thin flexible plastic film having a section thereof secured by a heat weld to a section of said cover so as to form the removable tab, said removable tab comprising said tear strip and the section of said cover secured thereto and being connected to an unsecured portion of said cover along a tearable joint of substantially less tear strength than either said removable tab or said unsecured portion of the cover, said tearable joint being defined by a wall-thinning flow of cover material adjacent to said heat weld, said tear strip further having a gripping portion which is free relaton to said cover, and said port having a total thickness above said base member substantially equal to the sum of the thicknesses of said pad, said thin-film cover and said thin-film tear strip.

The cover is preferably heat welded to the container by dielectric, ultrasonic or hot press sealing.

The heat welded sections and the tearable joint may be formed by heat welding the tear strip to the cover with a heat welding probe having an arcuate contact surface of concave cross-section to provide a relatively thin connection or tearaway joint between the covering layer and the tear-away tab.

In a second aspect the invention, according to claim 11, comprises a method of forming such a port. In such method, the tear strip is heat welded to the cover prior to placing the cover film over the sterile pad. This heat welding is done preferably by dielectric heating with high frequency radiant energy, although other types of heat welding or sealing may be used. The cover may then be secured to a wall or other portion of a container by an adhesion layer.

In another embodiment of the invention, the cover is welded or otherwise adhered to a mounting film on the underside of which is a pressure sensitive adhesive for securing the resulting module to the container. This embodiment of the port structure may be packaged for sale and distribution on a backing layer or strip which is removed from the pressure sensitive adhesive immediately prior to placing the port module on a container. In this application, the injection port is attached only to those containers into which a medication is likely to be injected and can be so placed by the supplier filling the containers or by the ultimate user of the container contents.

In certain embodiments, the ports may be attached to a tube structure instead of directly to a wall of the container. Where the port is mounted on a tube, the pad is sealed from the interior of the container so that contained liquid will not be contaminated by the pad material which may contain leachable ingredients.

The pad material is preferably a self-sealing type of elastomer, such as natural or synthetic rubber. It may also be comprised of polyvinyl chloride or similar hard plastic compositions which have been softened by the addition of plasticizers. One example of a highly plasticized injection pad of polyvinyl chloride is described in US-A-2,856,929 to Gossett et al.

Thin-film plastics which may be employed for the container walls, the pad cover, the tear-away strip, and the pad protector are preferably of a polyvinyl chloride resin having good leach resistant characteristics toward the fluid to be stored in the bag. Polyvinyl chloride is preferred because its dipolar composition has good heat sealing characteristics upon exposure to dielectric heating devices used for welding plastic layers together.

Brief Description of the Drawings

The invention is disclosed in the accompanying drawings in which:

Fig. 1 is a perspective view of an infusion bag made in accordance with the invention and illustrating its actual use in injecting medicinal fluid into a patient.

Fig. 2 is a sectional view in elevation taken along lines 2-2 of Fig. 1 and illustrating the injection port of the invention with the tear-away tab in place.

Fig. 3 is a sectional view similar to Fig. 2 illustrating removal of the tear-away tab to expose the sterile injection pad.

Fig. 4 is a diagrammatic view in perspective of a method for applying the tear-away strip to the covering film.

Fig. 5 is a sectional view in elevation taken along lines 5-5 of Fig. 4 and showing details of the heat welding probe.

Fig. 6 is a diagrammatic view in perspective illustrating the method of securing the covering film to the tubing from which infusion bags may be made.

Fig. 7 is an elevational view in section illustrating a modification of the invention employing a pressure sensitive adhesive.

Fig. 8 is a diagrammatic view in perspective illustrating a backing strip for packaging the embodiments of Fig. 7.

Fig 9 is a perspective view of another modification of the invention where the injection port is mounted on the exterior end of a tube communicating with the bag interior.

Fig. 10 is an elevational view in section of a port mounted on a fill tube.

Fig. 11 is an elevational view in section of a modified port mounted on a discharge tube.

Fig. 12 is an elevational view in section of a port modification providing a unitary tube for an infusion bag.

Fig. 13 is an elevational view in section of a modified port mounted on a modified unitary tube.

Fig. 14 is an elevational view in section of the modified port of Fig. 12 mounted on two different modifications of a unitary tube.

Fig. 15 is an elevational view in section of another port modification mounted on another modification of a unitary tube.

Best Mode and other Embodiments for carrying out the Invention

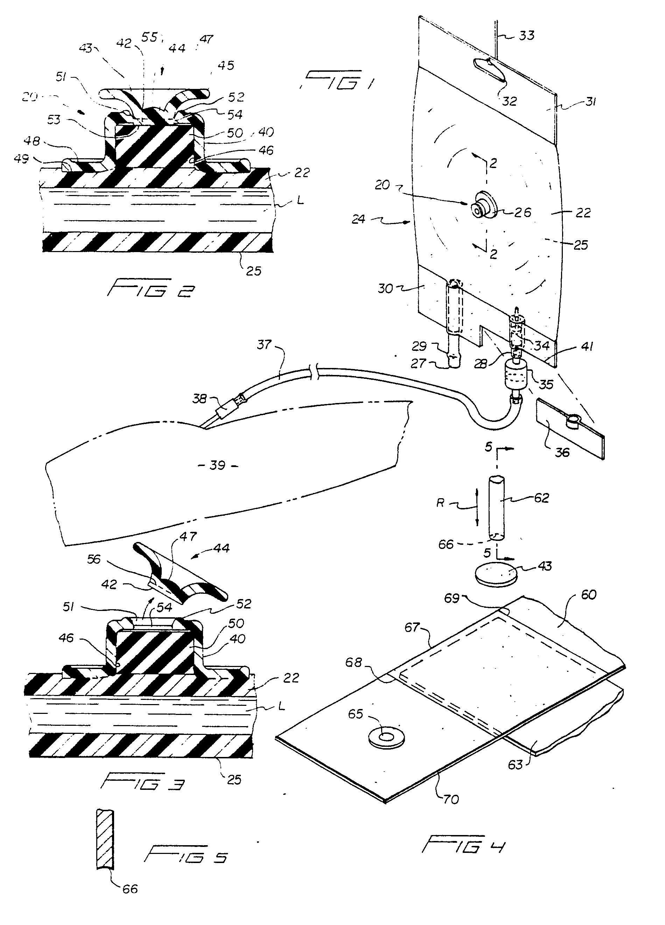

Figs. 1-3 disclose an injection port 20 which is secured to wall 22 of bag 24 by means of a heat welded skirt 26. Bag 24 also comprises a second thin-film wall 25 opposite to wall 22, and an inlet tube 27 and an outlet tube 28 secured between walls 22 and 25 which are heat welded together around penetrating portions of the tubes so as to form a supporting flange 30. Inlet tube 27 is used to fill bag 24 with blood plasma or other medicinal liquid L and is then crimped by heat welding along a section 29 to seal the tube passage communicating with the bag interior. Outlet tube 28 serves as a passage for discharging the bag contents and includes a diaphragm 34 which serves as a preformed barrier for keeping the bag contents sealed until immediately prior to use, at which time the diaphragm is pierced by a catheter, draw-off needle or the like. In lieu of projecting beyond the edge of the bag as does fill tube 27, outlet tube 28 preferably is sealed by a removable section 36 of flange 30 which is crimped to provide a weakened tear-off line 41. This seal maintains the sterility of the outer portion of tube 28 beyond diaphragm 34.

The opposite ends of the bag walls are also welded together to form a flange 31 having an aperture 32 for receiving a supporting hook 33 for hanging the bag so that its contents can be discharged. Outlet tube 28 may be connected to a drip chamber 35 for monitoring the flow of fluid passing down tube 37, through hypodermic needle 38 and into arm 39 of a patient.

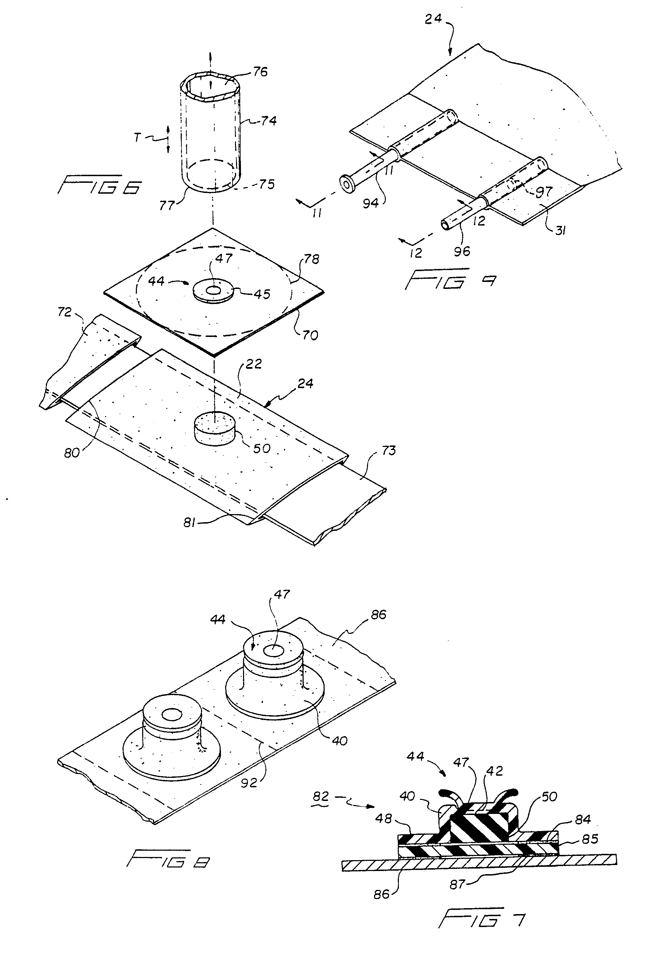

In Fig. 2, port 20 comprises a covering film 40 having a removable section 42 heat welded to a tear-off strip 43 having an overlap portion 45 forming a gripping lap. The tear-off strip has a central section 47 heat welded to removable cover section 42. Cover section 42, strip section 47 and lap 45 form a tear-away tab 44. Cover 40 has an annular skirt portion 48 heat welded in the area 49 to bag wall 22 so as to secure firmly against the bag wall a pierceable and resealable injection pad 50 of rubber or a rubber-like elastomer. Cover 40 cooperates with the base film provided by bag wall 22 or by an intervening subfilm (e.g., film 85 of Fig. 7) to form a sealed chamber 46 for maintaining the sterility of sterile pad 50 until tab 44 is removed.

In Figs. 2 and 3, as well as in the other cross-sectional views, the thickness of bag walls 22 and 25, cover 40 and tear-off strip 43 has been exaggerated relative to the thickness of pad 50 for purposes of clearly showing the interrelationship of these elements. The bag walls, the cover and the tear-off strip are of thin-film plastic and rubber-like pad 50 is preferably about 5 to 20 times, and more preferably about 10 times, the thickness of these films. The thickness of tear-off strip 43 is preferably about equal to or less than the thickness of cover 40.

A specially designed probe is used in the heat welding process for attaching tear-off strip 43 to cover 40 such that cover material under the probe flows outward, leaving the relatively thin cover section 42 heat welded to section 47 of the tear-off strip. The covering material flowing away from the heat welded area is represented by upper bulge 52 and lower button 53 in cover film 40. The melted portion of strip 43 may bulge upward as at 55. The welding process thus forms a weakened connection or joint 54 which will tear to expose the upper surface of pad 50 when tear-away tab 44 is pulled away as illustrated in Fig. 3. Dotted line 56 represents the heat weld between cover section 42 and tear-off strip section 47. Tab 44 thus includes removable cover section 42.

For purposes of simplicity, tear-off tab 44 may be referred to hereinafter merely as the tab or the removable tab. Bag walls 22 and 25, cover film 40, and tab film 43 are all preferably of the same type of heat weldable elastomeric material, such as polyvinyl chloride. Pad 50 is preferably of a resealable natural rubber or a resealable synthetic rubber elastomer. Both pad 50 and tab 44 are preferably disc-like members as seen best in Figs. 1, 4 and 6. Similarly, welded sections 42 and 47 are circular in planar cross-section and tab 45 comprises an annular overlap portion.

The process for forming port structure 20 will now be described with reference to Figs. 4, 5 and 6. A continuous sheet 60 of thin-film plastic material is fed between a probe 62 and a platen 63 of a dielectric heat welding device (not shown) for welding tab disc 43 to sheet 60 in a circular area 65 corresponding to the shape of the contact area 66 on the underside of welding probe 62. The welded area 65 corresponds to the central section 47 of tab 44. Contact area 66 of probe 62 has preferably an arcuate concave cross-section as shown in Fig. 5 so as to produce welded sections 42 and 47, adjacent tear joint 54, and unwelded or poorly welded area 51 as illustrated in Figs. 2 and 3.

After tear strip 43 has been heat welded to continuous sheet 60, probe 62 moves upwardly in the direction of arrow R so that the next section 67 may be advanced into position on platen 63 beneath probe 62. Either before or after or simultaneously with the welding process, sheet 60 is cut along lines 68 and 69 to form cover piece or blank 70.

Cover piece 70 is then advanced to the next station of the forming process at which a continuous plastic tube 72 is advanced over a welding platen 73 which separates the tube walls from each other and protects the underlying tube wall from the welding process. At this stage, a rubber pad 50 is secured to the upper surface of tube 72 by means of cover piece 70 which is heat welded to tube 72 by probe 74 which moves in the direction of arrow T between a downward position for pressing cover 70 around pad 50 and firmly against the upper wall 22 of tube 72 and platen 73. The probe is then moved upwardly to a position for releasing the welded components and permitting advancement of the next set of components to be secured together. Probe 74 has an annular contact surface 75 on its underside and includes a cylindrical chamber 76 for receiving pad 50 and pressing cover piece 70 tightly thereover. Probe 74 may include an outer cutting edge 77 for cutting cover piece 70 along line 78 to provide circular cover 40. Alternatively, cover piece 70 may be precut with a circular periphery before being transferred to the welding station of Fig. 6.

Either before or after cover 40 has been heat welded to upper bag wall 22, continuous tube 72 is cut along lines 80 and 81 to provide bag 24. This cutting step may be performed with the tubing on platen 73 or at another station. Inlet and outlet tubes 27 and 28 are then inserted in one open end of bag 24 and both open ends of this tube section are heat welded together to form end flanges 30 and 31 of infusion bag 24.

In the description below of the remaining embodiments of the invention, the same numerals have been used for the same elements as previously described and only the new elements have been assigned a different numeral in order to simplify the explanation of these embodiments. Accordingly, the embodiment of Fig. 7 comprises a tear-off tab 44 having a central section 47 welded to a section 42 of a cover 40 overlying a sterile rubber pad 50. In this embodiment, cover 40 is secured by heat welding or by an adhesive 84 to a mounting subfilm 85 which in turn is mounted on a removable backing strip 86 by a pressure sensitive adhesive 87. Adhesion layers 84 and 87 are annular in planar cross-section so as not to extend beneath pad 50. Pressure sensitive adhesive 87 preferably covers at least a major portion of the underside of film 85.

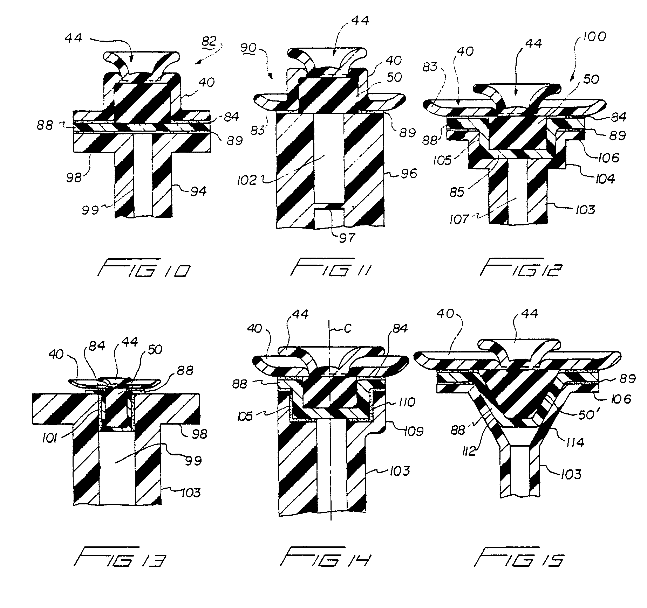

As shown in Fig. 8, the embodiment of Fig. 7 may be packaged on strips of backing material 86 which may be perforated along lines 92 so that individual port modules may be torn off and separated from the remaining package. Multiple strips of pressure sensitive modules 82 may be packaged in a sterile condition within a plastic packaging bag (not shown) or other conventional packaging container. The packaging container is then opened when a new supply of pressure sensitive ports is desired and individual modules are torn off from the rest of a backing strip for separate use. The advantage of these modular ports is that one or more ports may be placed in position on an infusion bag immediately prior to injecting the bag with a medication. Thus, when it is desired to inject medication into the contents of a prefilled bag, the backing layer 86 is pulled off of an individual module and the port blister is then pressed against an outer surface of the bag wall in a position similar to that shown in Fig. 1 for the more integral embodiments. The port is then held in position on the bag surface by the pressure sensitive adhesive 87. As an alternative, these modular ports may be mounted on the outer end of a bag tube in a manner similar to the embodiments described below. Tab 44 is subsequently removed and medication injected into the bag contents by piercing the sterile surface of pad 50 with a hypodermic needle, similar to needle 38 in Fig. 1.

Instead of being placed on the bag wall as shown in Fig. 1 both the integral embodiments of Figs. 1-3 and modular embodiments similar to the detachable embodiment of Figs. 7 and 8 may be installed on the outer end of either the fill tube 94 or the discharge tube 96 as illustrated in Figs. 9-11. These embodiments of the invention include provisions for protecting the bag contents from those ingredients of pad 50 which might be leachable by contact with the packaged liquid.

Fig. 10 shows a port 82 secured to a flange 98 at the outer end of fill tube 94 by means of an adhesion layer 89 which may be comprised of a permanent or pressure sensitive adhesive or a heat welded layer. The adhesive or weld layer 89 preferably has an annular shape so as to extend around but not across tube passageway 99. This embodiment is preferably used for the fill tube in order to provide the dual functions of sealing off the tube after the bag has been filled and for thereafter providing a pierceable pad for injecting medication into the bag contents. Since the tube passageway 99 is open to the bag interior, a subfilm or protector 88 of leach-resistant plastic prevents the bag contents from coming into contact with pad 50 during the period of time that a filled bag is in storage, which may be a relatively long period of time. When it is desired to inject a medication into the bag contents, tab 44 is removed shortly prior to use, and a hypodermic needle inserted into passage 99 to inject the desired medication. Thereafter, the body of the bag is kneaded so as to wash any residual medication out of passage 99 and thoroughly mix it with the bag contents. Port 82 may thereafter be left in place and discarded along with the bag after its contents have been emptied. A separate outlet tube is contemplated by this embodiment.

Port 90 without a subfilm protector may be used on the outer end of outlet tube 96 as illustrated in Fig. 11. Since the outlet tube has a preformed seal or diaphragm 97 in passageway 102, no protector film is needed beneath pad 50. A feature of this embodiment is that cover 40 is provided with an unsecured overlap or tab portion 83 forming a pull cover so that the entire port 90 can be removed from the end of outlet tube 96 to allow insertion of a drip chamber or other fluid discharging apparatus for puncturing diaphragm 97 as previously described. Where pull cover 40 is heat welded to the outer end of tube 96 or to an intervening protector film (Figs. 12-15), the dielectric heating probe has a hollow chamber to receive the raised port structure, similar to chamber 76 of probe 74 in Fig. 6, and an annular contact surface of arcuate concave cross-section.

To facilitate the use of tube ports, such as 82 and 90, inlet and outlet tubes 94 and 96 are preferably made of a harder and/or thicker plastic material than are bag walls 22 and 25 in order to provide added protection against accidentally piercing the tube wall with the needle being used to inject medication into the tube passage. The harder tube material may be of a polyvinyl chloride composition having a smaller quantity of plasticizers than the composition used for the more flexible walls of an infusion bag. The subfilms, namely mounting film 85 and protector film 88, are preferably of the same material as cover 40 and about the same thickness or less thick than cover 40.

Although tube ports 82 and 90 are shown with an adhesive securing the port to the outer end of a bag tube, other means of attachment are contemplated, including heat welding. Also tab portion 83 may be employed with the cover 40 of port 82 and tab 83 may be omitted from port 90, depending on whether the port will be ultimately removed and/or the pull force required to remove cover 40. It is desirable that the means of fastening the cover and/or any protector subfilm to underlying structures have sufficient adherence to maintain the port structure in place when tear-away tab 44 is removed to expose sterile injection pad 50.

A unitary tube 103 may be provided with a port 100 such that the combination serves all three functions previously described, namely, filling the bag, adding medication and then discharging the medicated bag contents. The end structure of tube 103 and the shape and arrangement of cover film 40, protector film 88 and injection pad 50 may take various forms, only some of which are illustrated in Figs. 12-15

In Fig. 12, tube 103 may have an outer flange 104 defining an enlarged tube cavity 105 surrounded at its upper edge by a lip 106. Pad 50 and a portion of protector 88 fill cavity 105. The outer portion of protector 88 is secured to lip 106 by an annular adhesion ring 89 and to cover 40 by the annular adhesion ring 84. Port 100 of Fig. 12 is similar to port 90 of Fig. 11 in that pad 50 is removed after injection of the desired medication by pulling off cover 40, thereby releasing pad 50 so that it may be pulled out of cavity 105. Protector 88 may remain in place and is punctured by the drip chamber needle or other discharging connection in a manner similar to diaphragm 34 of Fig. 1 and diaphragm 97 of Fig. 11. Through the provision of protector 88 in combination with a pull tab 83 on cover 40, the infusion bag need only have a single tube 103 which communicates with the bag interior through passage 107. This embodiment has all of the features of an inlet tube, an outlet tube and an injection pad. Thus, the infusion bag may be filled initially through passage 107 and the passage then sealed by application of port module 100. The bag then may be stored with its sealed contents. Immediately prior to dispensing those contents, tab 44 is removed for the injection of medication through pad 50. The bag is then kneaded to thoroughly mix the medication. Thereafter cover 40 and pad 50 are removed and a discharge device inserted into passage 107 through protector film 88.

In Fig. 13, pad 50 comprises an elongated cylinder having a diameter less than the diameter of tube passage 99. Protector 88 is secured to the internal bore of passage 99 by a cylindrical adhesion layer 101. Cover 40 is secured to an outer flange portion of protector 88 by an annular adhesion layer 84.

Fig. 14 illustrates two different structures for the outer ends of unitary tube 103, the structures being different on opposite sides of an imaginary dividing line represented by center line C. Cavity 105 may be formed directly within a tube body of sufficient thickness or may be formed by a radially extending flange structure 109. A principal difference between this embodiment and that of Fig. 12 is that protector 88 is secured to the bottom and sidewalls of cavity 105 as well as to the outer end of the tube by means of an adhesion layer 110. Layer 110 may instead be at any one of these three positions.

In Fig. 15, unitary tube 103 ends in a conical cavity 112 which receives a conically shaped pad 50' with an intervening protector 88. Cavity 112 is defined by a conical flange 114, the upper edge of which is surrounded by lip 106. Although not shown, adhesion layer 89 may also extend at least partially into cavity 112.

## Claims

1. A port suitable for penetration by a hollow needle to inject a fluid into the contents of a flexible container (24), said port including a sterile pad (50) of resealable material for sealing a puncture caused by penetration of the pad (50) and of a base member (22, 85, 88, 96, 97) for the pad (50) with the needle, and a sealed enclosure for maintaining the sterility of the pad (50) until removal of a tab (44) for exposing a sterile portion of the pad (50) to permit penetration of the pad (50) and the base member by the needle so as to provide said fluid injection, said port being characterised by:

a cover (40) of thin flexible plastic film sealingly secured to the base member (22, 85, 88, 96, 97) having a pierceable portion and defining therewith the sealed enclosure for the pad (50), said cover film (40) being sufficiently thin and flexible to conform substantially to the shape of the pad (50); and a tear strip (43) of thin flexible plastic film having a section (47) thereof secured by a heat weld (56) to a section (42) of said cover (40) so as to form the removable tab (44), said removable tab (44) comprising said tear strip (43) and the section (42) of said cover (40) secured thereto and being connected to an unsecured portion of said cover (40) along a tearable joint (54) of substantially less tear strength than either said removable tab (44) or said unsecured portion of the cover (40), said tearable joint (54) being defined by a wall-thinning flow (52, 53) of cover material adjacent to said heat weld (56), said tear strip (43) further having a gripping portion (45) which is free in relation to said cover (40), and said port having a thickness above said base member substantially equal to the sum of the thicknesses of said pad (50), said thin-film cover (40) and said thin-film tear strip (43).

2. The port of claim 1 further oharacterized in that said heat welded sections (42 and 47) and said tearable joint (54) are formed by heat welding said tear strip (43) to said cover (40) with a heat welding probe (62) having an arcuate contact surface (66) of concave cross-section, and said gripping portion (45) of the tear strip extends around said heat welded sections (42 and 47) of the tear strip (43) and the cover (40) so as to provide said removable tab (44) with an annular lap (45).

3. The port of claim 1 or olaim 2 further characterized in that said wall-thinning flow (52, 53) of cover material forms an indentation in said cover (40) extending inwardly toward said pad (50).

4. The port of any preceding claim further characterized in that said base member comprises a mounting film (85, 88) of thin flexible plastic film for preventing contact between said sterile pad (50) and the contents of said container until said mounting film is punctured by a hollow needle, and said cover (40) is positioned on one side of said pad (50) and said mounting film (85, 88) is positioned on the other side of said pad (50) so as to form a portable module (82) having a total thickness substantially equal to the sum of the thicknesses of said pad (50), said thin-film cover (40) said thin-film tear strip (43) and said thin-film mounting film (85, 88).

5. The port of claim 4 further characterized in that said port is attached to a container including a tube (94) having a passage (99) for communicating with the interior of said container, and said mounting film (85, 88) is secured to said tube (94).

6. The port of claim 4 further characterized in that said port further includes a layer of pressure sensitive adhesive (87, 89, 101, 110) on the side of said plastic mounting film (85, 88) opposite from said pad (50) for mounting said module (82, 100) on a container.

7. The port of claim 6 further oharacterized in that said port further includes a strip of backing material (86) for mounting a plurality of said modules (82) in a packaging container.

8. The port of claim 6 further characterized in that said cover (40) is secured to said mounting film (85, 88) by an annular adhesion layer (84), said layer of pressure sensitive adhesive (87, 89) is also an annular layer, and both of said annular layers are positioned beyond the periphery of said pad (50) so as not to extend between said pad (50) and said container.

9. The port of any of claims 1 to 6 further characterized in that said cover (40) includes a pull tab (83) extending beyond the securement of said cover (40) to the base member (88, 96, 97) and said securement comprises an adhesion layer (84, 89) formed so that said cover (40) may be detached from said base member and said pad (50) released for removal by pulling on said pull tab (83).

10. The port of any of claims 1 to 4 further characterized in that said port is attached to a container including a wall (22) of thin flexible plastic film, and in that said base member comprises a portion of said thin-film wall (22).

11. A method for making a port suitable for penetration by a hollow needle to provide fluid communication with the interior of a flexible container (24), said port including a sterile pad (50) of resealable material for sealing a puncture caused by penetration of the pad (50) and of a base member (22, 85) with the needle, and a sealed chamber for maintaining the sterility of the pad (50) until removal of a tab (44) for exposing a sterile portion of the pad (50) to permit penetration of the pad (50) and the base member by the needle so as to provide said fluid communication, said method being characterized by: heat welding a tear strip (43) of heat weldable thin flexible plastic film to a cover piece (40, 70) of heat weldable thin flexible plastic film so as to form a removable tab (44), said removable tab comprising a tear strip section (47) secured to a cover section (42) by a heat weld (56, 65) and an unwelded tear strip lap (45) which is free in relation to an unwelded portion of said cover piece (40, 70), said heat welding providing a tearable joint (54) connecting said tab (44) to said unwelded cover portion and having substantially less tear strength than either said tab or said unwelded cover portion, and said tearable joint (54) being defined by a wall-thinning flow (52, 53) of cover material adjacent to said heat weld (56, 65); placing a sterile pad (50) between said oover piece (40, 70) and a pierceable portion of the base member (22, 85) so that removal of said tab will expose a sterile portion of the pad and allow insertion of the needle through the pad and the base member; and securing said cover piece (40, 70) to said base member (22, 85) so as to define a sealed chamber for maintaining the sterility of the pad (50) until the tab (44) is removed and to hold the pad in position for sealing a needle puncture in the pierceable portion of the base member, said cover piece (40, 70) being sufficiently thin and flexible to conform substantially to the shape of the pad (50), and said port having a thickness above said base member substantially equal to the sum of the thicknesses of said pad (50), said thin-film cover piece (40, 70) and said thin-film tear strip (43).

12. The method of claim 11 further characterized in that said heat welded sections (42 and 47) and said tearable joint (54) are formed by heat welding said tear strip (43) to said cover piece (40, 70) with a heat welding probe (62) having an arcuate contact surface (66) of concave cross-section.

**Patentansprüche**

1. Anstechteil zum Hindurchführen einer hohlen Nadel zwecks Injizierens einer Flüssigkeit in den Inhalt eines flexiblen Behälters (24), umfassend ein steriles Polster (50) aus wiederversiegelbarem Material zum Versiegeln eines Durchstiches, verursacht durch das Hindurchführen durch das Polster (50), sowie ein Basisteil (22, 85, 88, 96, 97) für das Polster (50) mit der Nadel, und einen abgeschlossenen Raum zum Aufrechterhalten der Sterilität des Polsters (50) bis zum Entfernen einer Kappe (44) zum Freigeben eines sterilen Bereiches des Polsters (50), um das Hindurchführen der Nadel durch das Polster (50) und das Basiselement zwecks der genannten Flüssigkeitsinjektion zu erlauben, dadurch gekennzeichnet, daß ein Deckel (40) aus dünnem flexiblen Kunststoffilm am Basiselement (22, 85, 88, 96, 97) dichtend befestigt ist, mit einem durchstoßbaren Teil, um hiermit den abgedichteten Raum für das Polster (50) zu definieren, daß der Deckelfilm (40) genügend dünn und flexibel ist, um im wesentlichen der Gestalt des Polsters (50) zu entsprechen, daß ein Reißstreifen (43) aus dünnem flexiblen Kunststoffilm vorgesehen ist, der einen Abschnitt (47) aufweist, der durch eine Heißsiegelnaht (56) an einem Abschnitt (42) des Deckels befestigt ist, um die entfernbare Kappe (44) zu bilden, daß die entfernbare Kappe (44) den Reißstreifen (43) umfaßt, daß der Abschnitt (42) des Deckels (40) hieran befestigt und an einem unbefestigten Teil des Deckels (40) angeschlossen ist, und zwar entlang einer abreißbaren Verbindung (54) von wesentlich geringerer Reißfestigkeit als jener der abnehmbaren Kappe (44) sowie des unbefestigten Teiles des Deckels (40), daß die abreißbare Verbindung (54) durch einen wandverdünnenden Fluß (52, 53) des Deckelmateriales im Bereich der Heißsiegelnaht (56) definiert ist, daß der Reißstreifen (43) einen Griffteil (45) aufweist, der in Bezug auf den Deckel (40) frei ist, und daß der Anstechteil eine Stärke oberhalb des Basiselementes aufweist, die im wesentlichen gleich der Summe der Stärken des Polsters (50), des dünnfilmigen Deckels (40) und des dünnfilmigen Reißstreifens (43) ist.

2. Anstechteil nach Anspruch 1, dadurch gekennzeichnet, daß die heißgesiegelten Abschnitte (42 und 47) sowie die abreißbare Verbindung (54) durch Heißversiegeln des Reißstreifens (43) mit dem Deckel (40) gebildet sind, und zwar mittels einer Heißsiegelsonde (62) von bogenförmiger Kontaktfläche (66) von konkavem Querschnitt, und daß sich der Greifteil (45) des Reißstreifens um die Heißsiegelabschnitte (42 und 47) des Reißstreifens (43) und des Deckels (40) herumerstreckt, um die abnehmbare Kappe (44) mit einem Ringflansch zu erzeugen.

3. Anstechteil nach Anspruch 1 oder 2, dadurch gekennzeichnet, daß der wandverdünnende Fluß (52, 53) des Deckelmateriales eine Einkerbung im Deckel (40) erzeugt, die sich nach innen gegen das Polster (50) hin erstreckt.

4. Anstechteil nach einem der vorausgegangenen Ansprüche, dadurch gekennzeichnet, daß das Basiselement einen Befestigungsfilm (85, 88) aus einer dünnen flexiblen Plastikfolie aufweist, um einen Kontakt zwischen dem sterilen Polster (50) und dem Inhalt des Behälters solange zu unterbinden, bis der Befestigungsfilm von der hohlen Nadel durchstoßen ist, und daß der Deckel (40) auf der einen Seite und der Befestigungsfilm (85, 88) auf der anderen Seite des Polsters (50) angeordnet ist, um einen tragbaren Modul (82) zu bilden, der eine Gesamtstärke aufweist, die im wesentlichen gleich der Summe der Stärken des Polsters (50), des dünnfilmigen Deckels (40) sowie des dünnfilmigen Reißstreifens (43) und des dünnfilmigen Befestigungsfilmes (85, 88) ist.

5. Anstechteil nach Anspruch 4, dadurch gekennzeichnet, daß dieses an einem Behälter befestigt ist, der eine Hülse (94) mit einem Kanal (99) zum Herstellen einer leitenden Verbindung mit dem Innenraum des Behälters aufweist, und daß der Befestigungsfilm (85, 88) an der Hülse (94) befestigt ist.

6. Anstechteil nach Anspruch 4, dadurch gekennzeichnet, daß dieser weiterhin eine Lage aus druckempfindlichem Klebstoff (87, 89, 101, 110) auf der einen Seite des Kunststoffbefestigungsfilmes (85, 88) gegenüber dem Polster (50) zum Befestigen des Moduls (82, 100) auf einem Behälter aufweist.

7. Anstechteil nach Anspruch 6, dadurch gekennzeichnet, daß dieser einen Streifen aus Stützmaterial (86) zum Befestigen einer Mehrzahl der genannten Module (82) bei einem Verpackungsbehälter aufweist.

8. Anstechteil nach Anspruch 6, dadurch gekennzeichnet, daß der Deckel (40) am Befestigungsfilm (85, 88) durch eine ringförmige Klebstoffschicht (84) befestigt ist, daß die Lage aus druckempfindlichem Klebstoff (87, 89) ebenfalls eine ringförmige Lage ist, und daß beide ringförmige Lagen außerhalb des Umfanges des Polsters (50) angeordnet sind, sodaß sie sich nicht zwischen dem Polster (50) und dem Behälter erstrecken.

9. Anstechteil nach einem der Ansprüche 1 bis 6, dadurch gekennzeichnet, daß der Deckel (40) eine Zuglasche (83) aufweist, die sich über die Befestigung des Deckels (40) an dem Basiselement (88, 96, 97) hinauserstreckt, und daß die Befestigung eine Klebstoffschicht (84, 89) aufweist, die derart gebildet ist, daß der Deckel (40) vom Basiselement abgenommen und das Polster (50) zwecks Entfernung durch Ziehen an der Zuglasche (83) freigegeben werden kann.

10. Anstechteil nach einem der Ansprüche 1 bis 4, dadurch gekennzeichnet, daß dieses an einem Behälter befestigt ist, umfassend eine Wand (22) aus flexibler Kunststoffolie, und daß das Basiselement einen Teil der dünnfilmigen Wand (22) umfaßt.

11. Verfahren zum Herstellen eines Anstechteiles geeignet zum Hindurchführen einer hohlen Nadel zwecks Herstellens einer Flüssigkeitsverbindung mit dem Inneren eines flexibelen Behälters (24), mit einem sterilen Polster (50) aus wiederversiegelbarem Material zum Versiegeln eines Durchstiches verursacht durch Hindurchführen der Nadel durch das Polster (50) und durch ein Basiselement (22, 85), und mit einer versiegelten Kammer zum Aufrechterhalten der Sterilität des Polsters (50) bis zum Entfernen einer Kappe (44) zur Freigabe eines sterilen Teiles des Polsters (50), um das Hindurchführen der Nadel durch das Polster (50) und das Basiselement zu erlauben und um damit eine flüssige Verbindung herzustellen, dadurch gekennzeichnet, daß ein Reißstreifen (43) aus heißsiegelbarer dünner flexibler Plastikfolie an einem Deckelteil (40, 70) aus heißversiegelbarer, dünner flexibler Plastikfolie angeschweißt wird, um eine abnehmbare Kappe (44) zu bilden, daß die abnehmbare Kappe einen Reißstreifenabschnitt (47) aufweist, der an einem Deckelabschnitt (42) durch eine Heißsiegelnaht (56, 65) befestigt ist, ferner eine unverschweißte Reißstreifenlasche (45), die in Bezug auf einen unverschweißten Teil des Deckelteiles (40, 70) frei ist, daß die Heißsiegelnaht eine abreißbare Verbindung (54) bildet, die die Kappe (44) mit dem unverschweißten Deckelteil verbindet und im wesentlichen eine geringere Reißfestigkeit als jene der Lasche sowie als jene des unverschweißten Deckelteiles aufweist, daß die abreißbare Verbindung (54) definiert ist durch einen wandverdünnenden Fluß (52, 53) aus Deckelmaterial in der Nähe der Heißsiegelnaht (56, 65), daß ein steriles Polster (50) zwischen das Deckelteil (40, 70) und einen durchstoßbaren Teil des Basiselementes (22, 85) verbracht wird, sodaß ein Entfernen der Lasche einen sterilen Teil des Polsters freigibt und ein Einführen der Nadel durch das Polster und das Basiselement erlaubt, durch Befestigen des Deckelteiles (40, 70) am Basiselement (22, 85), um eine versiegelte Kammer zu definieren, um die Sterilität des Polsters (50) solange aufrechtzuerhalten, bis die Kappe (44) entfernt ist, daß das Polster in Position gehalten wird, um einen Nadeldurchstich im durchstoßbaren Teil des Basiselementes abzudichten, daß das Deckelteil (40, 70) genügend dünn und flexibel ist, um im wesentlichen der Gestalt des polsters (50) zu entsprechen, und daß das Anstechteil eine Stärke oberhalb des Basiselementes aufweist, die im wesentlichen gleich der Summe der Stärken des Polsters (50), des dünnfilmigen Deckelteiles (40, 70) und des dünnfilmigen Reißstreifens (43) ist.

12. Verfahren nach Anspruch 11, dadurch gekennzeichnet, daß die Heißsiegelabschnitte (42, 47) und die abreißbare Verbindung (54) durch Heißverschweißen des Reißstreifens (43) mit dem Deckelteil (40, 70) mittels einer Heißsiegelsonde (62) gebildet sind, die ihrerseits eine bogenförmige Kontaktfläche (66) von konkavem Querschnitt aufweist.

### Revendications

1. Dispositif d'insertion destiné à faire pénétrer une aiguille creuse dans une poche souple (24) en vue d'y injecter un liquide, ce dispositif comportant un tampon stérile (50) en un matériau ayant des propriétés élastiques pour obturer une perforation causée par la pénétration de l'aiguille dans le tampon (50) et dans un organe de base (22, 85, 88, 96, 97) de ce tampon (50), et une enveloppe scellée pour préserver la stérilité du tampon (50) après le retrait d'une languette (44) pour dégager une partie du tampon stérile (50) et permettre la perforation de ce tampon et de l'organe de base par une aiguille pour assurer ladite injection de liquide, ce dispositif étant caractérisé par un capuchon (40) en un film mince et souple de matière synthétique scellé à l'organe de base (22, 85, 88, 96, 97) et comportant une partie pouvant être percée et définissant l'enveloppe scellée du tampon stérile (50), ledit capuchon (40) étant suffisamment souple pour s'adapter effectivement à la forme du tampon (50); et une bandelette d'arrachage (43) en un film mince et souple de matière synthétique, ayant une partie (47) fixée par soudure thermique (56) à une partie (42) dudit capuchon (40) pour former la languette amovible (44), cette languette amovible (44) comprenant ladite bandelette d'arrachage (43) et la partie (42) dudit capuchon (40) qui y est fixée et étant liée à une partie libre dudit capuchon (40) le long d'un joint détachable (54) susceptible d'être arraché sous l'effet d'une force d'arrachage sensiblement inférieure à celle nécessaire pour éloigner la languette (44) ou ladite partie libre du capuchon (40), ledit joint détachable (54) étant défini par un amincissement (52, 53) des parois du capuchon au voisinage de la soudure thermique (56), ladite bandelette d'arrachage (43) comportant en outre une zone d'arrachage (45) qui est librement en contact avec ledit capuchon (40) et ledit dispositif d'insertion ayant une épaisseur, mesurée au-dessus de l'organe de base, effectivement égale à la somme des épaisseurs dudit tampon (50), dudit capuchon (40) et de ladite bandelette d'arrachage (43).

2. Dispositif selon la revendication 1, caractérisé en ce que lesdites parties soudées thermiquement (42 et 47) et ledit joint détachable (54) sont formés par la soudure thermique de ladite bandelette d'arrachage (43) audit capuchon (40) à l'aide d'un poinçon de soudure thermique (62) ayant une surface courbe (66) de section transversale-concave, et en ce que ladite zone d'accrochage (45) de la bandelette d'arrachage s'étend autour desdites parties soudées thermiquement (42 et 47) de la bandelette d'arrachage (43) et du capuchon (40), de manière à former ladite languette amovible (44) comprenant un rebord annulaire (46).

3. Dispositif selon l'une des revendications 1 ou 2, caractérisé en ce que le rétrécissement (52, 53) des parois du capuchon forme une encoche, solidaire, dudit capuchon (40), qui s'étend vers l'intérieur en direction dudit tampon (50).

4. Dispositif selon l'une quelconque des revendications précédentes, caractérisé en ce que l'organe de base comporte un film d'assemblage (85, 88) en un film mince de matière synthétique, pour éviter le contact entre le tampon stérile (50) et le contenu dudit conteneur jusqu'à ce que le film soit perforé par une aiguille creuse, en ce que ledit capuchon (40) est positionné sur un côté dudit tampon (50) et en ce que ledit film d'assemblage (85, 88) est positionné de l'autre côté dudit tampon (50) de manière à former un module portable (82) ayant une épaisseur totale égale effectivement à la somme des épaisseurs dudit tampon (50), dudit capuchon (40), de ladite bandelette d'arrachage (43) et dudit film d'assemblage (85, 88).

5. Dispositif selon la revendication 4, caractérisé en ce qu'il est fixé à un conteneur comportant un tube (94) ayant un passage de communication (99) avec l'intérieur du conteneur et en ce que le film d'assemblage est solidaire dudit tube (94).

6. Dispositif selon la revendication 4, caractérisé en ce qu'il comporte une couche d'une substance adhésive sensible à la pression (87, 89, 101, 110) disposée sur une face du film d'assemblage (85, 88) opposée audit tampon (50) pour permettre le montage dudit module (82, 100) sur un conteneur.

7. Dispositif selon la revendication 6, caractérisé en ce qu'il comporte une bande d'un matériau support (86) pour assurer la fixation de plusieurs de ces modules (82) dans un emballage.

8. Dispositif selon la revendication 6, caractérisé en ce que ledit capuchon (40) est fixé audit film d'assemblage (85, 88) au moyen d'une couche adhésive annulaire (84), en ce que ladite couche de substance adhésive sensible à la pression (87, 89) est également annulaire et en ce que les deux couches annulaires sont disposées au-delà de la périphérie dudit tampon (50) de manière à s'étendre entre ledit tampon (50) et ledit conteneur.

9. Dispositif selon chacune des revendications 1 à 6, caractérisé en ce que ledit capuchon (40) comporte une languette d'arrachage (83) s'étendant au-delà de la fixation dudit capuchon (40) vers l'organe de base (88, 96, 97) et en ce que cette fixation comporte une couche adhésive (84, 89) agencée de telle manière que ledit capuchon (40) puisse être détaché dudit organe de base, et ledit tampon (50) libéré en vue de son remplacement, par traction sur ladite languette de traction (83).

10. Dispositif selon chacune des revendications 1 à 4, caractérisé en ce qu'il est fixé à un conteneur comportant une paroi (22) en un film fin de matière synthétique souple, en ce que ledit organe de base comprend une partie de cette paroi (22).

11. Procédé de fabrication d'un dispositif d'insertion destiné à faire pénétrer une aiguille creuse dans une poche souple (24) en vue d'y injecter un liquide, ce dispositif comportant un tampon stérile (50) en un matériau ayant des propriétés élastiques pour obturer une perforation causée par la pénétration de l'aiguille dans le tampon (50) et dans un organe de base (22, 85) et une enveloppe scellée pour préserver la stérilité du tampon (50) après l'éloignement d'une languette (44) pour dégager une partie du tampon stérile (50) et permettre la perforation de ce tampon et de l'organe de base par une aiguille pour assurer ladite injection du liquide, ce procédé étant caractérisé en ce que l'on soude thermiquement une bandelette d'arrachage (43) d'un film souple fin d'une matière synthétique pouvant être soudée par la chaleur, sur un capuchon (40, 70) en un film fin de matière synthétique susceptible d'être soudé thermiquement, de manière à former une languette amovible (44), ladite languette amovible comportant une partie (47) fixée à une partie dudit capuchon (42) par une soudure thermique (56, 65), ainsi qu'un rebord d'arrachage non soudé (45) qui est libre par rapport à une partie non soudée du capuchon (40, 70), ladite soudure thermique formant un joint détachable (54) connectant ladite languette amovible (44) à ladite partie non soudée du capuchon, et ayant une résistance à la traction effectivement inférieure à celle de ladite patte ou de ladite partie non soudée du capuchon, et ledit joint détachable (54) étant défini par un rétrécissement de la paroi (52, 53) dudit capuchon adjacent à ladite soudure (56, 65); en ce que l'on dispose un tampon stérile (50) entre le capuchon (40, 70) et une partie à perforer de l'organe de base (22, 85), de sorte que le retrait de cette languette libère une partie stérile du tampon et permette l'insertion de l'aiguille creuse à travers ledit tampon et l'organe de base; en ce que l'on fixe le capuchon (40, 70) sur l'organe de base (22, 85) de manière à définir une chambre scellée pour maintenir la stérilité du tampon (50) jusqu'à ce que la languette (44) soit retirée, et maintenir le tampon en position pour sceller une perforation de l'aiguille faite dans une partie de l'organe de base susceptible d'être perforée, ledit capuchon (40, 70) étant suffisamment fin et souple pour s'adapter effectivement à la forme du tampon (50) et ledit dispositif ayant une épaisseur, mesurée au-dessus de l'organe de base, sensiblement égale à la somme des épaisseurs dudit tampon (50), dudit capuchon (40, 70) et de ladite bandelette d'arrachage (43).

12. Procédé selon la revendication 11, caractérisé en ce que les parties soudées thermiquement (42 et 47) et le joint détachable (54) sont formés par soudure thermique de la bandelette d'arrachage (43) dudit capuchon (40, 70), au moyen d'un poinçon de soudure thermique (62) ayant une surface de contact courbe (66) de section transversale concave.

0 097 054

FIG 1

FIG 2

FIG 3

FIG 5

FIG 4

1

FIG 6

FIG 9

FIG 8

FIG 7

2

FIG 10

FIG 11

FIG 12

FIG 13

FIG 14

FIG 15